Europäisches Patentamt

European Patent Office

Office européen des brevets

(19)

(11) Numéro de publication: **0 025 729
B1**

(12) **FASCICULE DE BREVET EUROPEEN**

(45) Date de publication du fascicule du brevet: **27.12.84**

(21) Numéro de dépôt: **80401188.0**

(22) Date de dépôt: **13.08.80**

(51) Int. Cl.³: **H 02 B 1/20, H 01 H 67/26**

�===

(54) Commutateur à plusieurs couches de points de croisement.

(30) Priorité: **16.08.79 FR 7921202
15.04.80 FR 8008934**

(43) Date de publication de la demande:
**25.03.81 Bulletin 81/12**

(45) Mention de la délivrance du brevet:
**27.12.84 Bulletin 84/52**

(84) Etats contractants désignés:
**BE CH DE GB IT LI NL SE**

(56) Documents cités:
**FR-A-1 457 726
FR-A-1 584 604
FR-A-2 038 444
GB-A-1 196 111
US-A-3 312 792
US-A-4 125 309**

(73) Titulaire: **L'Etat Français représenté par le
Secrétaire d'Etat aux Postes et
Télécommunications
(Centre National d'Etudes des
Télécommunications) 38-40 rue du Général
Leclerc
F-92131 Issy-les-Moulineaux (FR)**

(72) Inventeur: **Gentric, Alain
27 Lotissement de Keranroux Ploubezre
F-22300 Lannion (FR)**
Inventeur: **Frances, André
3, Allée des Ajoncs
F-22300 Lannion (FR)**

(74) Mandataire: **Le Guen, Louis François
13, rue Emile Bara BP 91
F-35802 Dinard Cedex (FR)**

Courier Press, Leamington Spa, England.

## Description

La présente invention concerne un commutateur à matrices à plusieurs couches de points de croisement selon le préambule de le revendication 1. Ces commutateurs sont utilisables notamment dans des répartiteurs téléphoniques ou autres, ou dans des dispositifs semblables. Plus particulièrement, l'invention concerne un tel commutateur à sélection par coordonnées.

Les commutateurs téléphoniques à barres croisées sont connus depuis fort longtemps. Récemment, on a développé des commutateurs à plusieurs couches tels que ceux qui sont décrits dans les brevets FR—A—1 584 604 et FR—A—2 106 738. Ces commutateurs se composent de plusieurs premières nappes de fils parallèles orientés dans une première direction et de plusieurs secondes nappes de fils parallèles intercalés entre les premières nappes et orientées dans une direction perpendiculaires aux premières nappes. On définit ainsi, dans une direction normale aux nappes de fils, des points de croisement multiples qui sont ouverts ou fermés par des sortes de fiches multicontacts déplacées perpendiculairement aux nappes. Dans le brevet FR—A—2 038 444, on utilise également des fiches multicontacts que l'on fait tourner pour fermer ou rompre les contacts. Ces commutateurs ont été conçus pour constituer des commutateurs à fonctionnement rapide intervenant dans l'établissement de communications entre les abonnés.

Par ailleurs, dans un répartiteur général, il est nécessaire de pouvoir relier, sans blocage, un circuit d'entrée à un circuit de sortie puisque le remplissage du répartiteur dépend en premier lieu de la demande des abonnés. De façon classique, les câbles d'arrivée et de départ sont raccordés sur des têtes verticales pour les uns et des réglettes horizontales pour les autres au moment de l'installation. Puis lorsque l'on veut établir une liaison, on relie le circuit d'arrivée au circuit de départ sélecté au moyen de jarretières. Ces jarretières ont deux fils dans le cas d'un abonné et jusqu'à sept fils dans le cas de circuits basse fréquence en transmissions.

En exploitation normale, il est souvent nécessaire de modifier le câblage du répartiteur et on peut estimer que les jarretières sont en moyenne changées de place une fois par an. Lorsque les jarretières sont très nombreuses, leur poids et les enchevêtrements qu'elles provoquent font qu'il devient impossible de les retirer du répartiteur, si bien qu'on en ajoute sans cesse ce qui engorge encore un peu plus les passages. L'accessibilité aux différents endroits du répartiteur oblige à espacer les éléments, donc à augmenter les dimensions de celui-ci, nécessite la présence de plusieurs agents et rend difficilement mécanisable le travail de gestion et d'exploitation de ces répartiteurs.

Dans le brevet FR—A—2 284 240, il est décrit un système répartiteur automatique à commutateur à matrices qui sont constituées par des cartes de circuits imprimés équipés de broches associées aux conducteurs. Les cartes sont amovibles dans des alvéoles de bâtis où elles sont reliées par des câbles plats souples. A chaque opération, il faut sortir une carte, positionner un connecteur, en forme de strap, sur les broches du point de croisement choisi, puis remettre la carte en place. Cette manoeuvre est à recommencer autant de fois qu'il y a de contacts par circuit, ce qui est malcommode et constitue une source d'erreurs. De plus, l'apparente simplicité du système est compensée par la complexité concomitante de l'automate du système.

Par ailleurs, dans le brevet US—A—3 312 792, il est décrit une matrice de commutation à une couche de points de croisement comportant une première nappe de paires de fils parallèles, orientés dans une première direction, et une seconde nappe de paires de fils parallèles, orientés dans une direction perpendiculaire à la première. La première et la seconde nappe sont superposées. Aux points de croisement des nappes, sont prévues des fiches pouvant tourner d'un quart de tour, dans un sens ou dans l'autre, pour établir ou rompre le trajet électrique entre une paire de fils de la première nappe et une paire de fils de la seconde nappe. Dans le brevet US—A—3 312 792, les moyens utilisés pour faire tourner les fiches comprennent un pignon enfilé sur l'axe de chacune des fiches et des crémaillères. Les pignons et les crémaillères peuvent être engrenés sélectivement par des moyens d'embrayage individuels.

Un objet de l'invention consiste à prévoir un commutateur permettant de réaliser des répartiteurs à matrices à plusieurs couches de points de croisement comportant des moyens capables de faire tourner sélectivement les fiches de commutation, qui évitent les inconvénients mentionnés ci-dessus et qui soient plus simples et moins onéreux qui ceux prévus dans le brevet US—A—3 312 792.

Un autre objet de la présente invention consiste à prévoir un organe de commande des têtes de fiches rotatives qui ne nécessite un accès que sur une face du commutateur, tout en conservant les avantages des commutateurs ci-dessus.

Conformément à l'invention, les objets mentionnés ci-dessus sont atteints par la mise en oeuvre des combinaisons de moyens définies dans la partie caractérisante de la revendication principales complétée par les revendications dépendantes.

Les caractéristiques de l'invention apparaîtront clairement à la lecture de la description suivante d'exemples de réalisation, ladite description étant faite en relation avec les dessins joints, parmi lesquels:

la Fig. 1 est une vue en perspective d'un exemple de réalisation d'un élément de commutateur,

la Fig. 2 est une vue en perspective d'un fiche connue,

la Fig. 3 est une vue éclatée d'un empilage, suivant l'invention, d'éléments selon la Fig. 1, ainsi que d'une fiche de commutateur par rotation,

la Fig. 4 est une vue schématique en plan illustrant le fonctionnement de l'empilage de la Fig. 2,

la Fig. 5 est une vue en perspective éclatée d'un empilage obtenu avec des éléments plus longs dérivés de celui de la Fig. 2,

la Fig. 6 est une vue en perspective, avec coupes partielles, d'un détail d'un élément de l'empilage de la Fig. 5,

la Fig. 7 est une vue éclatée schématique en perspective illustrant la construction de l'empilage de la Fig. 5,

la Fig. 8 est une vue schématique en perspective d'une colonne formée par la superposition d'empilage de la Fig. 7,

les Figs. 9a à 9c sont des vues en perspective d'un point de croisement de commande d'un exemple de réalisation d'un module de commande utilisable avec les empilages des Figs. 7 et 8, dans trois états différents de fonctionnement,

la Fig. 10 est une vue schématique en plan illustrant le fonctionment des points de croisement, selon les Figs. 9a à 9c, dans un module de commande,

la Fig. 11 est une vue schématique en plan des deux colonnes adjacentes, suivant la Fig. 8, avec ses câbles de raccordement,

la Fig. 12 est une vue schématique en perspective d'un premier exemple de réalisation d'un ensemble de colonnes de commutation de la Fig. 8,

la Fig. 13 est une vue schématique en perspective d'un second exemple de réalisation d'un ensemble de colonne de commutation de la Fig. 8,

la Fig. 14 est une vue schématique en plan d'un montage de colonnes de la Fig. 8,

la Fig. 15 est une vue schématique en plan d'une variante du montage de la Fig. 14,

la Fig. 16 est une vue schématique d'un dispositif de commande de sélection utilisable avec une colonne de la Fig. 8,

les Figs. 17 et 18 montrent respectivement, d'une part, la pile de la Fig. 2 et, d'autre part, une variante de la fiche de la Fig. 2,

la Fig. 19 est une vue d'une pile formée d'empilages adaptés aux fiches de la Fig. 17,

les Figs. 20a à 20c sont respectivement des vues en élévation, de bout et en plan de la partie active d'un organe de commande de commutation adaptés aux fiches de la Fig. 17,

les Figs. 21a à 21c sont des vues schématiques montrant les changements d'états d'une fiche de commutation, suivant la Fig. 17,

la Fig. 22 est une vue schématique illustrant le positionnement de l'organe de commande des Figs. 20a à 20c,

la Fig. 23 est une vue schématique montrant un premier exemple d'orientation des fiches,

la Fig. 24 est une vue montrant une second exemple d'orientation des fiches,

la Fig. 25 est une vue illustrant la disposition de piles, suivant la Fig. 19, associées à un système de positionnement d'organes de commande,

la Fig. 26 est une vue en plan de l'ensemble des piles de la Fig. 25,

la Fig. 27 montre une variante de la disposition de la Fig. 26,

la Fig. 28 est une vue d'une autre variante de disposition, et

les Figs. 29a à 29d sont des vues schématiques en perpective d'un outil manuel de commande de commutation des fiches, dont l'objet est le même que celui de l'organe des Figs. 20a à 20c.

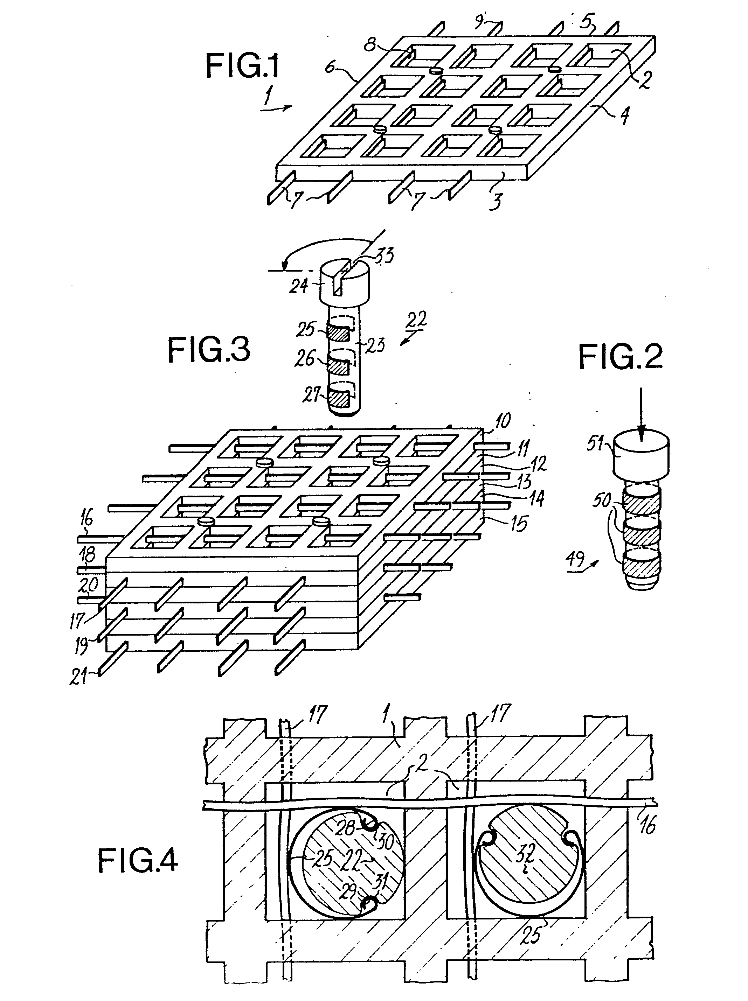

L'élément de commutateur de la Fig. 1 est constituée par une grille carrée 1 en matière plastique isolante présentant des ouvertures carrées 2 formant des alignements parallèles aux côtés externes 3 à 6 de la grille. Dans les alignements, les ouvertures 2 sont régulièrement espacées. Des bandes ou poutres métalliques, que l'on désignera plus généralement dans la suite par des fils 7, traversent de part en part la grille 1 perpendiculairement aux côtés 3 et 5. Chaque fil 7 traverse un alignement d'ouvertures 2 parallèle aux côtés 4 et 6, avec dans chaque ouverture traversée un segment apparent 8. La hauteur de chaque fil 7 est inférieur à l'épaisseur de la grille 1 avec son axe longitudinal dans le plan médian de la grille. Comme l'indique également la vue en plan de la Fig. 3, dans chaque ouverture 2, le segment associé 8 ne passe pas par le centre de l'ouverture 2, mais est déporté d'une distance $r$ inférieure au côté de l'ouverture. La Fig. 1 indique que tous les filss d'une grille sont déportés dans le même sens par rapport aux centres des ouvertures qu'ils traversent. Les bouts 9 des fils 7, qui se trouvent à l'extérieur de la grille, servent au raccordement des poutres à des câbles de liaison. Les fils 7 sont conducteurs de l'électricité et fabriquées en un matériau dont l'élasticité est compatible avec une pression de contact raisonnable.

La fiche 49 de la Fig. 2 est une fiche d'un type connu. Elle comprend un corps cylindrique autour duquel sont prévus des anneaux circulaires de contact 50 de même hauteur que 25 et séparés les uns des autres comme 25, 26 et 27. La tête 51 de 49 ne comporte pas de fente. En pratique, la fiche 49 est prévue pour être enfichée manuellement dans la pile 35 pour y créer des contacts par enfichage, ce qui peut être intéressant dans des commutateurs rudimentaires. Dans ce cas, pour saturer une matrice, ill suffit d'un nombre de fiches 49 égal aux nombres de fils sur le côté le plus court de la matrice.

La Fig. 3 montre une pile de grilles 10 à 15, toutes identiques à la grille 1. Les nappes 16, 18 et 20 des grilles 10, 12 et 14 sont orientées dans une direction perpendiculaire aux nappes 17, 19 et 21 des grilles, 11, 13 et 15. La Fig. 3 montre également une fiche 22 comportant un corps cylindrique 23 pourvu d'une tête 24, l'ensemble de 23 et 24 étant en matière plastique isolante. Le corps 23 porte des lamelles de contact 25, 26 et 27, toutes identiques, en métal ou alliage bon conducteur. Les lamelles de contact 25 à 27 sont régulièrement espacées le long du corps. Elles n'entourent pas complètement le corps 23 et ont une hauteur de l'ordre de l'épaisseur d'une grille plus la hauteur d'un fil 7.

A la Fig. 4, on a montré la section transversale de la fiche 22 dans le plan passant par la lamelle 25. Il apparaît que le diamètre du corps 23 est inférieur à $a+h$ de manière que le corps 23 seul puisse être introduit dans une ouverture de grille sans porter simultanément sur les bords de la grille et le segment de fil 8. La section de la lamelle 25 est sensiblement en arc de cercle de 270°, le diamètre du cercle de 25 étant supérieur à celui de 23. Les bords extrêmes 28 et 29 de 25 sont enroulés sur eux-mêmes et se logent dans des rainures longitudinales 30 et 31 creusées dans le corps 23. Etant donné la différence de diamètre entre 25 et 23, la lamelle 25 s'écarte progressivement de la surface de 23 à partir de ses bords 28 et 29. Le diamètre de 25 est tel que l'ensemble du corps 23 et de la lamelle 25 entre en contact avec les côtés du carré défini par le fil 16, le fil 17 et les faces des ouvertures correspondantes. Dans ces conditions, la lamelle 25 se déforme et équilibre chaque contact, en permettant des rotations plus faciles.

Comme on l'a mentionné ci-dessus, la hauteur de la lamelle 25 est supérieure à l'épaisseur d'une grille, mais inférieure au double de cette épaisseur. Donc, la lamelle 25 peut entrer en contact, à la fois, avec les fils 16 et 17.

En fait, la Fig. 4 montre la fiche 22 en position de travail, 25 étant en contact avec 16 et 17. Elle montre également une seconde fiche 32, identique à 22, mais tournée d'un quart de tour, dans le sens inverse des aiguilles d'une montre, si bien que 25 n'est plus en contact qu'avec 17. La fiche 32 est en position de repos.

La tête 24 de la fiche 22 est pourvue d'une fente 33 permettant de faire tourner la fiche d'un quart de tour dans le sens inverse des aiguilles d'une montre ou dans le sens direct pour la mettre au repos ou à nouveau au travail. On notera que, si on tourne la fiche 22 d'un quart de tour dans le sens des aiguilles d'une montre, elle reste en position de travail. En pratique, comme on le verra dans la suite en décrivant le dispositif de commande, la fiche 22 ne peut prendre que deux positions, sans ambiguïté.

En se référant à nouveau à la Fig. 3, il apparaît qu'en enfonçant la fiche 22 dans une ouverture de la pile, on ferme trois points de croisement superposés et indépendants, l'un entre un fil de la nappe 16 et un fil de la nappe 17, l'autre entre un fil de la nappe 18 et un fil de la nappe 19, et le troisième entre un fil de la nappe 20 et un fil de la nappe 21.

La pile de la Fig. 3 dans laquelle chaque grille comprend 4×4 ouvertures 2 permet l'insertion de quatre fiches, telles que 22, pour réaliser quatre connexions distinctes. Dans la pratique, il est nécessaire de prévoir des matrices de plus grandes dimensions et des piles comportant plus de six grilles, la pile de la Fig. 3 n'ayant été montrée qu'à titre d'exemple pour illustrer la structure de base du commutateur suivant l'invention.

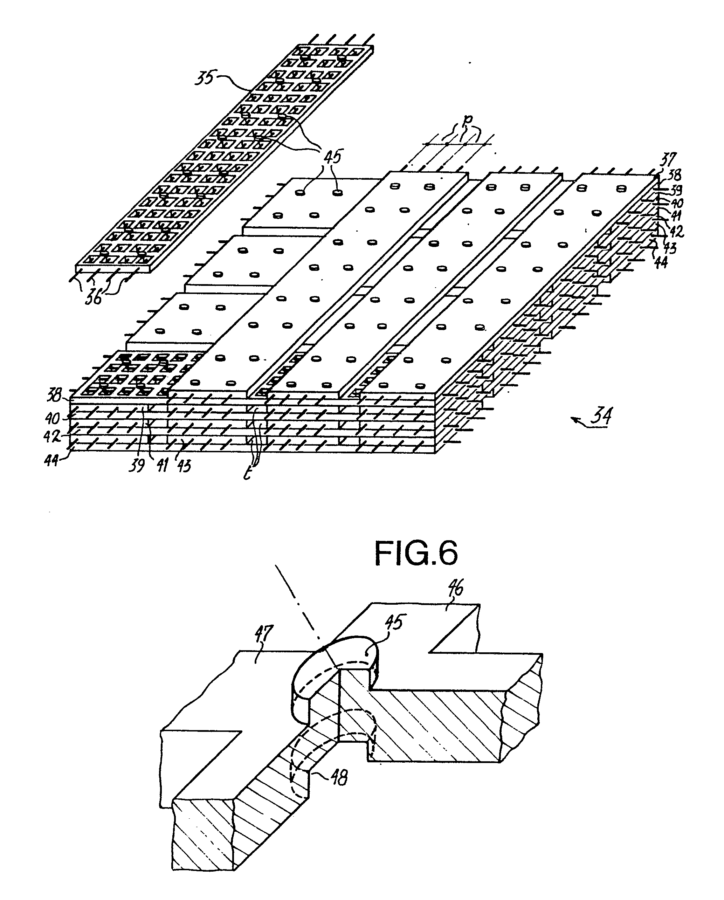

A la Fig. 5, on a représenté une pile 34 constituée à partir de grilles allongées, telles que la grille 35 représentée avant sa mise en place sur la pile. La grille 35 a une forme rectangulaire comportant quatre lignes d'ouvertures 2, chaque ligne comptant 19 ouvertures. La grille 35 est traversée par une nappe de quatre fils conducteurs 36 dont chacune passe respectivement dans une ligne d'ouvertures, parallèlement à la longueur de la grille 35. Les positions respectives des segments nus des fils sont identiques à celles de la grille 1. En fait, la grille 35 ne se distingue de la grille 1 que par le fait que dans une direction elle comporte un plus grand nombre d'ouvertures.

La pile 34 est formé de hit niveaux 37 à 44, chaque niveau étant formé par quatre grilles 35 disposées parallèlement les unes à côté des autres, leurs grands côtés étant adjacents. Dans chaque niveau, les grilles adjacentes 35 sont séparées l'une de l'autre par un intervalle $t$ égal au pas des ouvertures dans la grille 35. Les grilles des niveaux impaires 37, 39, 41 et 43 sont orientées dans le même sens tandis que les grilles des niveaux pairs 38, 40, 42 et 44 sont orientées dans le sens perpendiculaire. Les niveaux étant superposés, les ouvertures créent des alignements verticaux comme dans la pile de la Fig. 2. Avec quatre lignes de trous par grille, plus trois invervalles de la largeur d'une ligne de trous entre les grilles, on a donc 4×4+3×1=19 lignes de trous par niveaux ce qui correspond aux 19 trous par ligne pour constituer une pile à section carrée. Toutefois, il faut noter que les lignes des intervalles ne sont pas utilisables. Donc dans chaque niveaux, il y a une matrice de 16×16 trous utilisables. Une telle pile permet donc de réaliser 16 connexions à quatre contacts chacune.

D'une manière plus générale, une grille du type de celle de 35 se compose de $n$ lignes de trous, ce qui correspond à une nappe de $n$ fils conducteurs parallèles au pas $p$. Chaque ligne peut comprendre $q$ trous. Dans le cas d'une matrice carrée, si on dispose parallèlement $k$ grilles par niveaux, avec un intervalle de $t$ lignes entre grilles adjacentes, on a la relation:

$$q=kn+(k-1)t$$

On obtient alors longueur et largeur en multipliant $n$ et $q$ par le pas $p$. On peut aussi prévoir des matrices rectangulaires et, pour l'homme de l'art, il est facile de trouver les dimensions modulaires des grilles qui sont reliées au côté entrée du commutateur et des grilles reliées au côté sortie.

A titre d'exemple, une grille de base peut comprendre une nappe de 10 conducteurs au pas de 5 mm. Chaque conducteur a une section de 1×0,2 mm et la grille d'une épaisseur de 2,5 mm est surmoulé sur la nappe. La longueur d'une grille peut atteindre 120 pas ou plus. Pour obtenir les grilles, on fabrique une bande de grande longueur surmoulée sur une nappe de fils, puis on découpe la bande à la longueur voulue.

La Fig. 6 montre un tenon cylindrique 45 prévu en un point de croisement de deux barreaux 46 et 47 de la grille 35 sur une face de cette grille. Sur l'autre face de la grille, en face du tenon 45, ets prévu un trou borgne cylindrique 48. La grille 35 comporte ainsi un certain nombre de couple composé d'un tenon 45 et d'un trou borgne 48, et il en est de même des autres grilles de la pile 34. Ces couples sont prévus pour assurer la bonne mise en place des grilles superposées, un tenon 45 d'une grille inférieure venant se loger dans un trou correspondant de la grille immédiatement supérieure. Evidemment la répartition des couples tient compte du fait que d'un niveau à un autre la direction des grilles change et que des intervalles vides sont prévus entre des grilles parallèles d'un niveau. Les tenons et les trous sont fabriqués au cours du surmoulage des fils 36 pour obtenir la grille. La pile 35 ainsi obtenue est rigide et solide, et, de plus, pratiquement étanche aux poussières.

A la Fig. 5, on a représenté une pile 35 comportant huit niveaux. En pratique, dans une application à un répartiteur de circuits de transmission, il est nécessaire d'empiler quatorze niveaux, ce qui, avec les données numériques mentionnées ci-dessus, correspond à une épaisseur de matrice de 35 mm. Dans une application à un répartiteur de lignes d'abonnés, on n'a besoin que de quatre niveaux, ce qui conduit à une épaisseur de 10 mm.

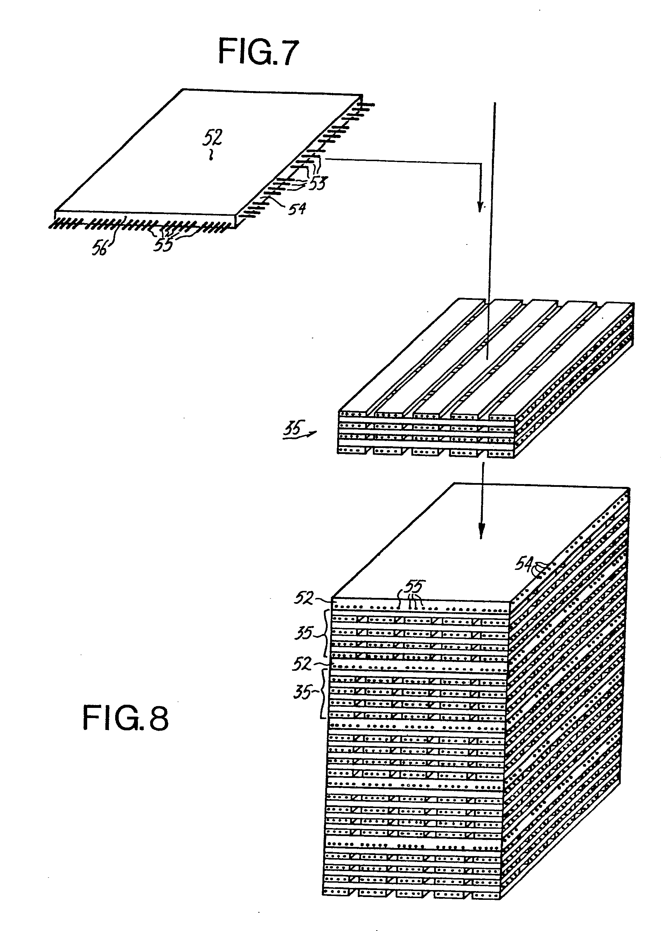

A la Fig. 7, on a représenté symboliquement une pile 35 que l'on coiffe avec un module de commande 52. Le module de commande supporte les têtes des fiches de commutation qui sont enfichées dans les trous de la pile 35 au moment de la pose du module 52. Le module 52 comporte des barres de sélection 53 qui le traversent de part en part et dont les premières extrémités sont visibles sur le côté 54 du module. Il comporte également des barres de commande 55 qui le traversent de part en part et dont les premières extrémités sont visibles sur le côté 56 du module. On verra dans la suite comment en poussant ou tirant d'une manière adéquate ces barres 53 et 55, on peut faire tourner les fiches d'un quart de tour à droite ou à gauche, pour obtenir la fermeture ou l'ouverture de points de croisement dans la matrice constituée par la pile 35. Les sections des barres 55 sont en forme de T renversé, les semelles des T servant à retenir les têtes de fiches.

Le module 52 est, de plus, muni sur sa face supérieure de tenons, non montrés, du type de 45 et présente sur sa face inférieure des trous 48. Ainsi, par ses trous 48, le module 52 s'emboîte bien sur le premier niveau de 35.

La Fig. 8 montre que l'on peut constituer des colonnes de piles 35, respectivement surmontées de leurs modules 52, empilées les unes sur les autres. Les tenons 45 des modules 52 permettent le positionnement de la pile immédiatement supérieure. Evidemment, une telle colonne n'est réalisable que parce que les barres 53 et 55 des modules de commande sont accessibles par les côtés.

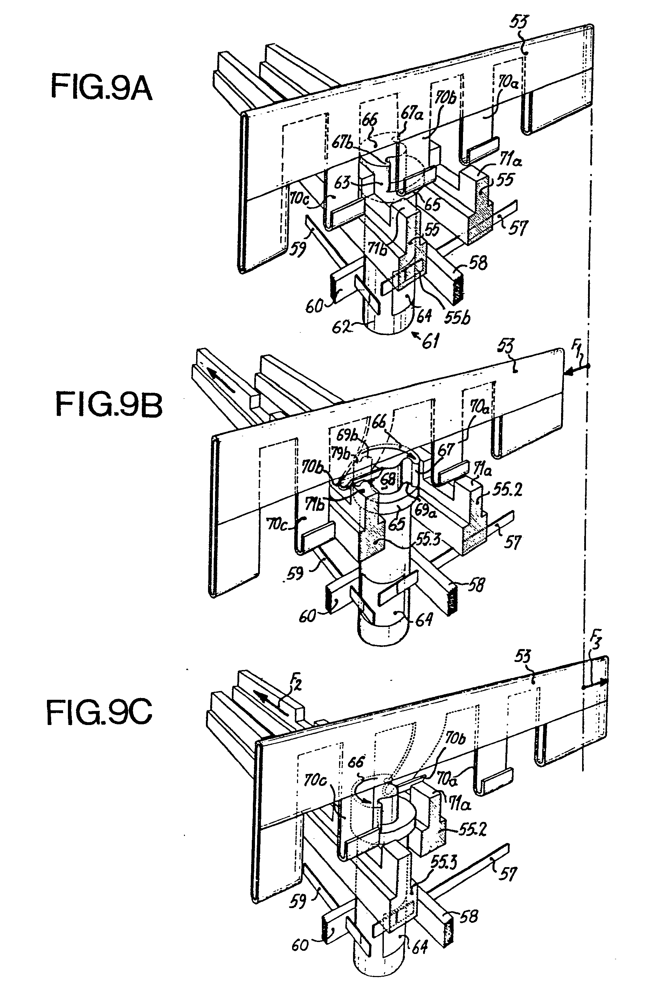

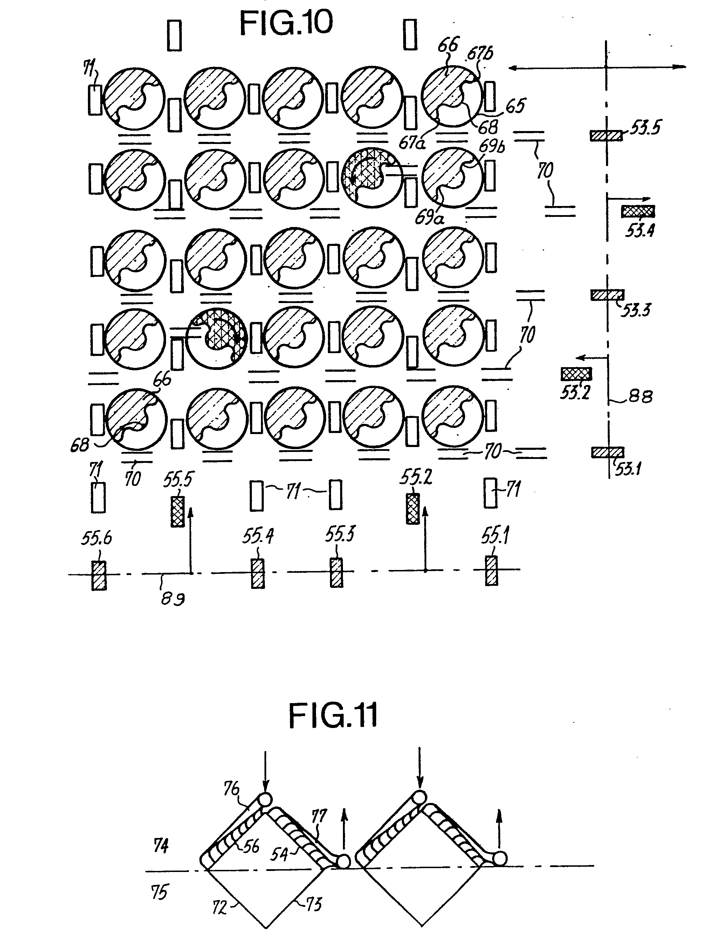

Les Figs. 9a à 9b illustrent la structure d'un module de commande 52, ainsi que son fonctionnement. A la Fig. 9a, on a montré un fil conducteur 57 porté par un barreau 58 d'une grille 35, un fil conducteur 59 porté par un barreau 60 d'une autre grille 35 placée sous la première et orientée perpendiculairement, et une fiche 61 constituée par un corps 62, semblable à 23, et une tête 63. Le corps 62 porte une lamelle de contact 64, semblable à 25. La tête 63 comporte une partie basse cylindrique 65, qui repose sur les bords des semelles des barres de travail 55 adjacentes à un profil en T et une partie haute 66 en forme de croissant présentant un renflement cylindrique en son centre. La Fig. 10, qui est une vue en plan, montre schématiquement un certain nombre de têtes 64 faisant apparaître, pour chacun un croissant 66 comportant une partie externe cylindrique de même diamètre que 65, deux cornes 67a et 67b, ainsi que la partie renflée cylindrique 68 dont l'axe est confondu avec celui de 65. Chaque corne 67a ou 67b est raccordée au cylindre 68 par une surface concave 69a et 69b. Comme on le verra dans la suite, les bouts des cornes 67a et 67b interviennent directement dans la commutation d'état de la fiche, tandis que la partie centrale 68 n'est conservée que pour rendre le croissant moins fragile.

A la Fig. 9a, on a également montré une barre de sélection 53 et deux barres de travail 55a et 55b. La barre de sélection 53 est parallèle au fil 57 tandis que les barres 55a et 55b sont parallèles au fil 59. Plus précisément, la barre 53 se trouve dans le plan vertical du barreau, non montré, parallèle à 60 de l'autre côté de la fiche 61, la barre 55a se trouve dans le plan vertical du barreau 58, et la barre 55b se trouve dans le plan vertical du barreau, non montré, parallèle à 58 de l'autre côté de la fiche 61.

La barre de sélection 53 a la forme d'un peigne dont les dents 70a, 70b, 70c, etc., sont souples et sont disposées suivant un pas égal au pas des grilles. Le dos du peigne 53 est situé sensiblement au-dessus du haut des têtes 64 des fiches 61 et les dents sont assez longues pour que leurs parties inférieures soient au niveau des cornes 67a et 67b, mais au-dessus de la base 65. Chaque barre de travail 55a ou 55b porte des dents rigides, telles que 71a et 71b, qui sont réparties le long de la barre suivant le pas des grilles. Le bas de la barre 55a ou 55b est au-dessous de la base 65 et le haut des dents 71a ou 71b est à un niveau supérieur au bas des dents 70a, 70b, . . .

En position de repos, comme le montre la Fig. 9a, la barre de sélection 53 est placée de manière que chaque dent 70a, 70b, 70c, etc., se trouve respectivement en face de l'axe d'une fiche 61. Les barres de travail 55a et 55b sont placées de manière que les dents se trouvent respectivement en face des axes des fiches. La largeur d'une dent 70a, 70b, etc., est telle que, dans la position indiquée, les barres de travail 55a et 55b peuvent être déplacées sans que les dents 71a ou 71b ne touchent les dents 70a ou 70b, mais passent librement entre elles. Réciproquement, dans la position indiquée, la barre 53 peut être déplacée avec ses dents passant entre les dents des barres de travail.

Par ailleurs, en position de repos, la fiche 61 est dans une position telle que la corne 67a est plus éloignée de la dent 70b que la corne 67b. La lamelle de contact 64 n'est alors en contact qu'avec le fil 57 et le courant ne peut passer de 57 à 59.

La vue de la Fig. 9b illustre le fonctionnement de la commutation qui fait passer la fiche 61 de l'état de repos à l'état de travail. La barre 53 est tout d'abord poussée dans le sens de la flèche F1, par des moyens non montrés, de manière à ce que la partie de la dent 70b qui était en face de la corne 67a vienne en face de la corne 67b. L'autre partie de la dent 70b se trouve alors devant la dent 71b de la barre de travail 55b. Ensuite, la barre 55b est poussée, dans le sens de la flèche F2, si bien que la dent 71b pousse le bas flexible de la dent 70b, laquelle vient en contact avec la corne 67b de la tête de la fiche, puis pousse cette corne ce qui provoque la rotation de la fiche 61. La course de la barre de travail 55b est telle que la fiche 61 tourne d'un quart de tour, si bien que la lamelle de contact 64 vient en contact, à la fois, avec les fils 57 et 59. Le courant peut passer de 57 à 59. Ensuite, la barre 55b est relâchée si bien qu'elle reprend sa position initiale de la Fig. 9a, par exemple sous l'action d'un ressort de rappel non montré. De même, la barre de sélection 53 est relâchée et reprend sa position initiale, par exemple également sous l'action d'un ressort de rappel. La fiche 61 garde la position qu'elle a atteinte au cours de la commutation si bien que le contact se maintient sans apport extérieur d'énergie et sans entraîner de contrainte mécanique, comme dans certains commutateurs où un élément reste coincé en extension.

La vue de la Fig. 9c illustre le fonctionnement de la commutation qui fait passer la fiche 61 de l'état de travail à l'état de repos. La barre 53 est tout d'abord tirée dans le sens de la flèche F3, par des moyens non montrés, de manière que la partie de la dent 70b qui était, au repos, en face de la corne 67b vienne en face de la corne 67a. L'autre partie de la dent 70b se trouve alors devant la dent 71a de la barre de travail 55a. Ensuite, la barre 55a est poussée, dans le sens de la flèche F2, si bien que la dent 71a pousse le bas flexible de la dent 70b, laquelle vient en contact avec la corne 67a de la tête de la fiche, puis pousse cette corne ce qui provoque la rotation de la fiche 61. La course de la barre de travail 55a est telle que la fiche 61 tourne à l'envers d'un quart de tour, si bien qu'elle reprend la position de repos indiquée à la Fig. 9a. Ensuite, les barres de sélection 53 et de travail 55a sont relâchées, comme décrit en relation avec la Fig. 9b.

La Fig. 10, qui montre partiellement une matrice de têtes de fiches 61 associée à un jeu de barres de sélection 53.1, 53.2, 53.3, . . ., et un jeu de barres de travail 55.1, 55.2, 55.3, . . ., permet d'illustrer le fonctionnement d'un module 52. Les barres de sélection 53.1 à 53.5 sont représentées chacune par un petit rectangle horizontal, à droite de la matrice, avec, dans son prolongement horizontal, des doubles traits horizontaux symbolisant les dents flexibles 70 des barres. Les barres de travail 55.1 à 55.6 sont représentées chacune par un petit rectangle vertical, sous la matrice, avec, dans son prolongement vertical, une suite de petits rectangles verticaux symbolisant les dents rigides 71 des barres. La ligne verticale 88 indique la position des extrémités des barres de sélection et la ligne horizontale 89 celle des extrémités des barres de travail au repos. La barre 53.2 a été poussée vers la matrice, dans la position indiquée à la Fig. 9b, puis la barre de travail 55.5 a été poussée comme à la Fig. 9b, si bien que la tête de la fiche de la deuxième ligne et de la quatrième colonne a été tournée dans le sens de la flèche, c'est à dire mise au travail. La barre 53.4 a, au contraire, été tirée vers l'extérieur de la matrice et la barre 55.2 a été poussée, comme à la Fig. 9c, si bien que la tête de la fiche de la quatrième ligne et de la deuxième colonne est tournée dans le sens de la flèche, c'est à dire mise au repos.

Il apparaît que le nombre des barres de sélection est égal au nombre des lignes de la matrice, comme le nombre des dents d'une barre de travail, et que le nombre de barres de travail est égal au nombre des colonnes de la matrice, plus un, comme le nombre des dents d'une barre de sélection. Cela explique qu'à la Fig. 7, pour le module 52, on fait apparaître des séries de quatre barres 53 sur le côté 56 et des séries de cinq barres 55 sur le côté 56.

Il apparaît que les piles de contacts qui ont été décrites en relation avec les Figs. 5 et 8 permettent de concevoir des niveaux de surface quelconque et d'avoir un nombre de contacts quelconque par point de croisement en empilant le nombre nécessaire de niveaux. On peut ainsi construire des matrices à une paire de contacts par point de croisement pour une utilisation dans les répartiteurs d'abonnés, ou à trois paires de contacts, plus un, par point de croisement pour une utilisation dans des répartiteurs de circuits. Par ailleurs, comme le montre la Fig. 5, chaque niveau peut être fabriqué d'une façon modulaire, l'élément modulaire de base 35 se composant d'une nappe de conducteurs parallèles au pas *p*. Les raccordements des entrées et des sorties peuvent se faire respectivement sur les faces du parallèlépipède de la Fig. 8, qui correspondent respectivement aux côtés 56 et 54 des modules 52, les deux autres faces pouvant servir aux tests de la circuiterie ainsi qu'à la commande des barres 53 et 55.

La Fig. 11 met en évidence les avantages de ce type de pile. Si on partage la pile selon un axe passant par une diagonale qui laisse du même côté 54 et 56, on délimite deux zones 74 et 75, c'est à dire la zone 74 dévolue aux équipes de ligne et d'installation, et la zone 75 réservée au service d'exploitation. Dans la zone 74, le côté 56 reçoit les conducteurs de câbles d'arrivée 76 et le côté 54 reçoit les conducteurs de câbles de départ 77 vers le central. Certaines liaisons inter-matrices sont réalisables en usine. Les deux autres côtés 72 et 73 sont affectés à la commande et aux tests (interruption de liaison, réalisation de dérivation, etc.).

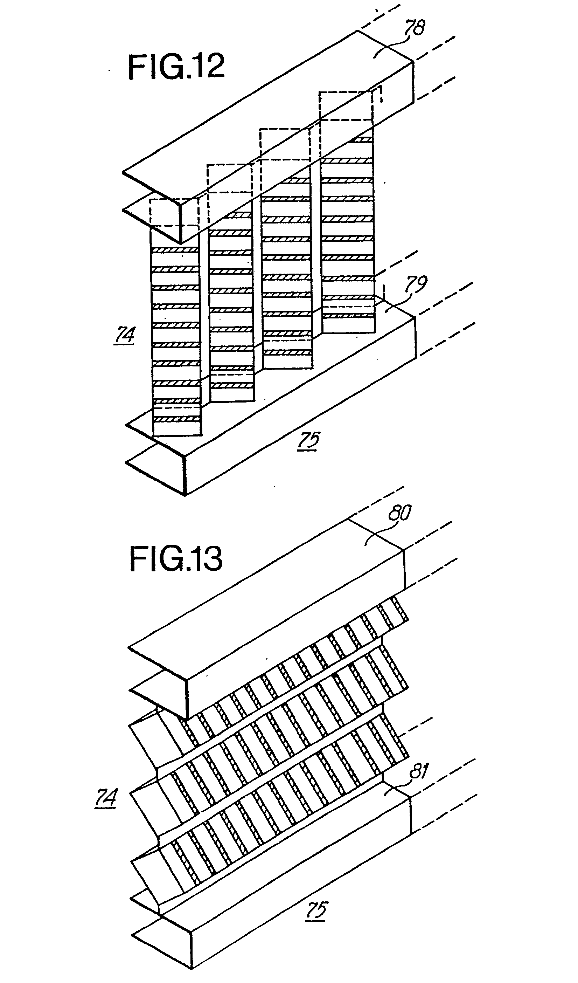

A la Fig. 12, on a montré une série de piles de la Fig. 8 montées verticalement entre deux chemins de câbles 78 et 79 respectivement pour les câbles d'arrivée 76 et les câbles départ 77. Les piles sont orientées de manière que leurs diagonales soient alignées en laissant toutes d'un côté la zone d'installatation 74 et de l'autre côté la zone d'exploitation 75.

A la Fig. 13, on a montré une série de piles de la Fig. 8 montées horizontalement sur des moyens non montrés, entre deux chemins de câbles 80 et 81 analogues à 78 et 79. Les plans diagonaux des piles sont alignés pour séparer les zones 74 et 75.

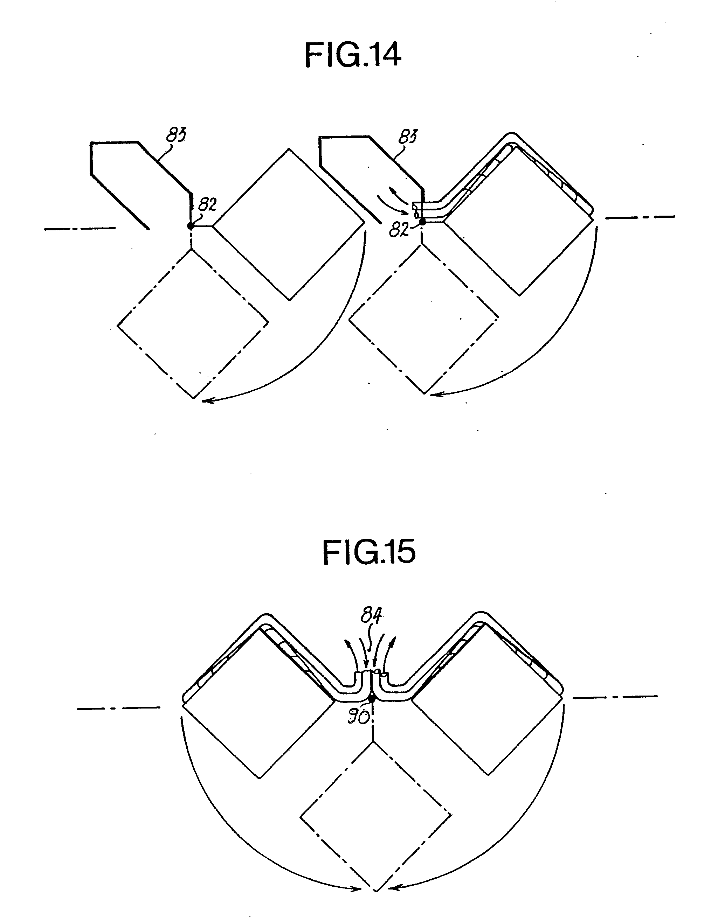

En pratique, en fonction du niveau d'automatisme désiré, on peut prévoir plusieurs variantes pour l'exploitation. La Fig. 14 montre deux baies de répartiteur formées de piles de la Fig. 8, dans lesquelles des matrices sont montées sur un axe vertical 82 qui permet de les extraire de la pile en les faisant tourner, comme indiqué par les flèches, pour avoir accès à la totalité de la surface de chaque matrice lorsqu'on désire établir ou rompre une connexion en agissant sur les têtes de fiches. Les câbles sont passés dans une goulotte 83 et subissent donc des torsions à chaque manoeuvre de la matrice.

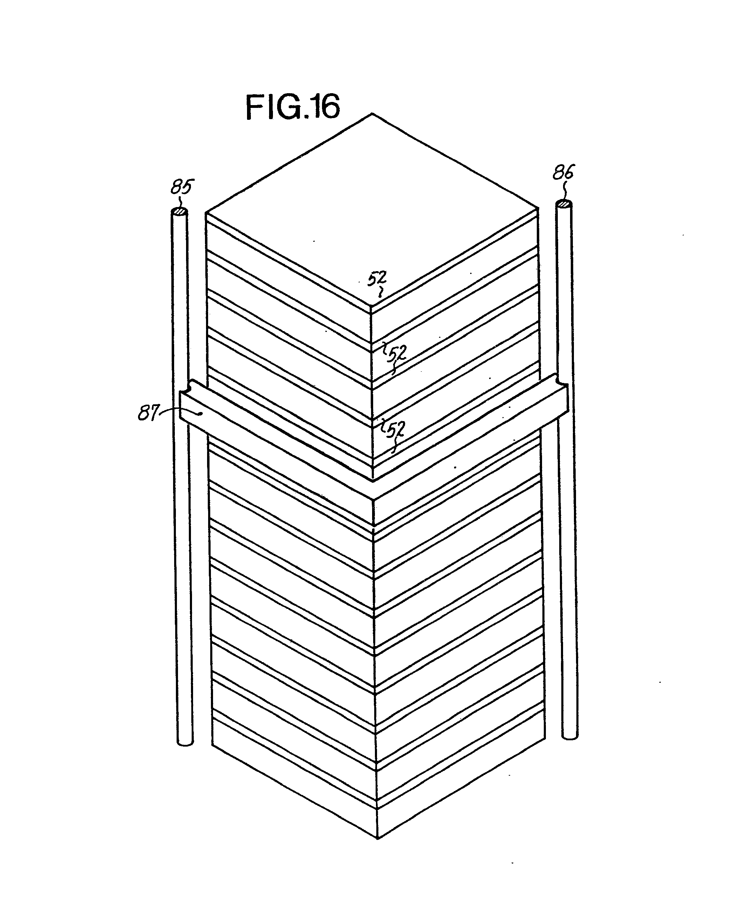

Dans un autre exemple de réalisation de la Fig. 15, chaque baie comprend deux piles de matrices avec, à l'arrière, en partie centrale, les chemins de câbles 84. Le principe de gestion reste le même, les matrices étant articulées sur un même axe vertical 90 et étant disposées symétriquement par rapport à celui-ci. Cette disposition de la Fig. 15 devrait prendre moins de place que celle de la Fig. 14.

En se référant à nouveau à la structure de la Fig. 12, on a montré à la Fig. 16 une baie de répartiteur entièrement automatisée, la face visible de la pile donnant sur la zone d'exploitation. Les matrices sont fixes. Devant la pile, est montée, entre deux rails 85 et 86, un organe de manoeuvre 87. L'organe 87 a la forme d'un angle droit dont le plan est perpendiculaire à celui des rails 85 et 86, et est donc parallèle à ceux des niveaux des matrices ou encore au plan des dispositifs de commande 52. Les rails 85 et 86 peuvent porter des crémaillères sur lesquelles roulent des roues dentées montées au bout des côtés de l'organe 87, afin de pouvoir positionner l'organe 87 devant l'un quelconque des dispositifs 52. Une fois positionné, l'organe 87 qui contient des moyens, tels que des bobines à noyaux, non montrées, en nombre égal à celui des barres de travail et de sélection. Chaque noyau accroche la barre qui lui correspond. Un système de sélection sélectionne les bobines à exciter, dans un sens ou dans l'outre, pour pousser ou tirer la barre correspondante et, ainsi provoquer la commutation d'une fiche dans une matrice, comme on l'a vu en relation avec les Figs. 9b, 9c et 10.

Comme on le verra dans la suite, le nombre élevé des fiches à commande par rotation, comme 22, est compensé par la possibilité de les commander à partir d'une seule face latérale de la pile et, même, automatiquement.

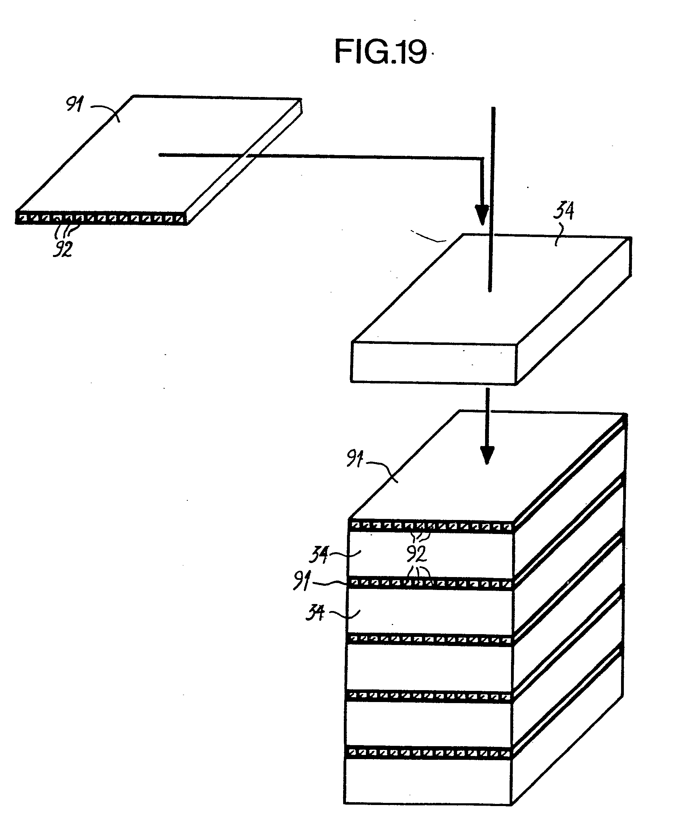

A la Fig. 19, on a représenté symboliquement une pile 34 que l'on coiffe avec un module de commande 91. Le module de commande coiffe les têtes des fiches de commutation qui sont enfichées dans les trous de la pile 34 au moment de la pose du module 91.

En fait, le module de commande 91 a la forme d'un couvercle formé de rainures 92 juxtaposées qui servent d'éléments de guidage pour un organe de commutation. On verra dans la suite comment en introduisant un organe de commutation dans ces rainures 92, on peut sélectivement faire tourner les têtes 24 des fiches.

A la partie droite, en regardant la Fig. 19, on a montré comment on peut constituer des colonnes de piles 34, respectivement surmontées de leurs modules de commande 91. On notera que les rainures 92 des couvercles sont toutes orientées dans la même direction de manière à permettre un accès sur une seule face.

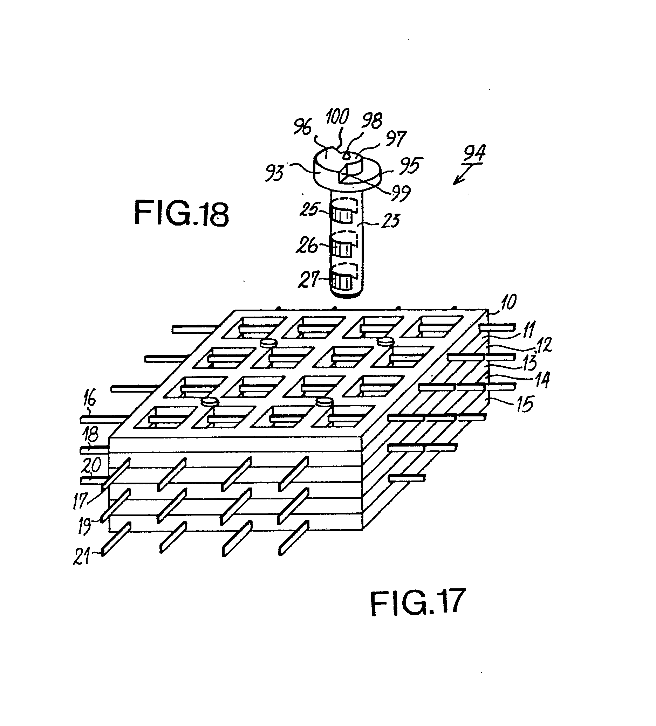

Aux Figs. 17 et 18, on a respectivement représenté, d'une part, la pile de grilles 10 à 15 de la Fig. 3 et, d'autre part, une variante 94 de la fiche 22.

La tête 93 de la fiche 94 comporte une partie basee cylindrique 95 et une partie haute en forme de secteur circulaire 96 présentant un renflement cylindrique 97 en son centre. Le centre du renflement cylindrique 97 est surmonté d'un pion conique 98. Bien entendu, le corps de la fiche, le cylindre de 95, celui de 97 et le cône 98 sont de révolution autour du même axe. La partie sectorielle 96 est limitée par les plans 99 et 100 qui font entre eux un angle au centre légèrement inférieur à 180°.

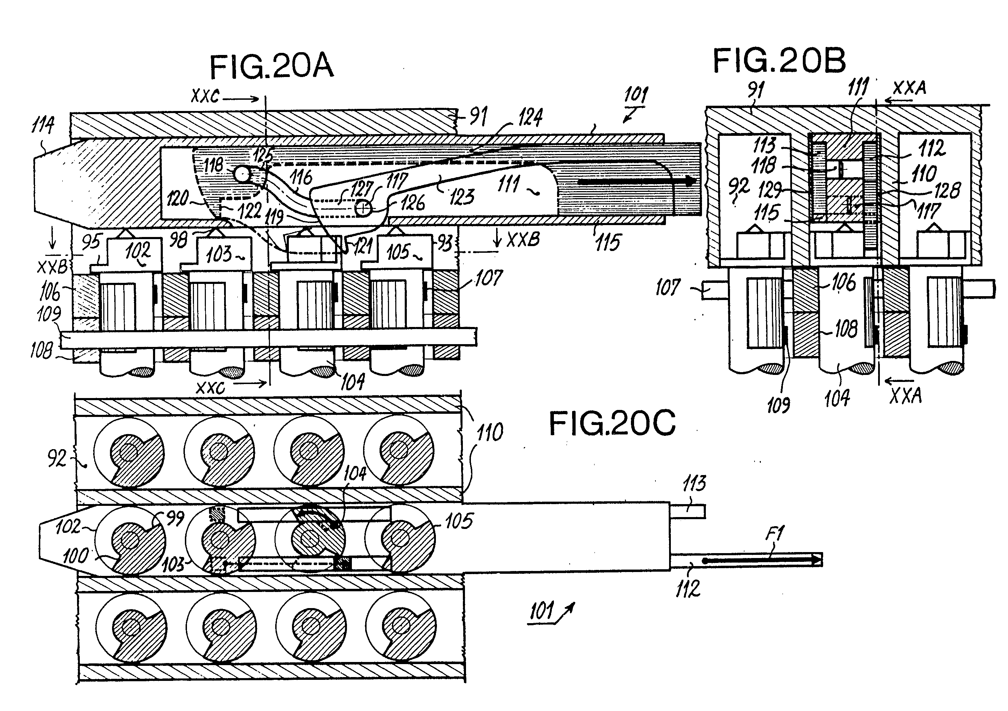

Les Figs. 20a à 20c montrent un organe de commutation 101 introduit dans une rainure 92 d'un couvercle 91 pour commuter par rotation une des fiches de la pile 34, associée au couvercle 91. La Fig. 20a est une vue en coupe suivant la ligne XXA—XXA de la Fig. 20b; la Fig. 20c est une vue en coupe suivant la ligne XXB—XXB de la Fig. 20a, l'organe 101 étant dessiné, mais supposé transparent; et la Fig. 20b est une vue en coupe verticale suivant la ligne XXC—XXC de la Fig. 20a.

Il apparaît que les parties cylindriques 95 des fiches 102 à 105 reposent sur les bords des mailles de la grille 106 qui supporte la nappe de fils 107. La grille 106 repose sur une grille 108 qui supporte la nappe de fils 109. Les cloisons 110 délimitant les rainures 92 du couvercle 91 reposent sur les bords des mailles de la grille 106 qui sont parallèles aux fils 107. Le largeur d'une paroi 110 est inférieure à celle des barreaux des grilles, une face verticale de chaque cloison tombant pratiquement à la verticale de la face verticale du barreau qui est adjacente au fil 107 et l'autre face de la cloison tombant au milieu sensiblement du barreau. Ainsi, les parties cylindriques 95 peuvent tourner librement. Le déport de chaque cloison s'explique par le fait que, dans chaque maille, la fiche est également excentrée, comme le montre la Fig. 4.

La hauteur de l'organe 101 est pratiquement égale à la distance entre le plan délimité par le sommet de cônes 98 et le fond supérieur de chaque rainure 92. La largeur de l'organe 101 est égale à la largeur interne des rainures 92.

L'organe 101 se compose d'une poutre centrale de section en I 111 et de deux tiges plates de commande 112 et 113, disposées de chaque côté de l'âme de la poutre en I 111. La somme des épaisseurs des tiges 112, 113 et de l'âme de 111 est égale à celle des semelles du I. La semelle supérieure du I porte contre le fond de la rainure 92. Le bout 114 de la partie 111 qui est introduite dans une rainure 92 est biseautée de manière à faciliter son introduction.

Près de l'extrémité 114, les deux côtés de la semelle inférieure 115 sont découpés sur une certaine longueur. Par ailleurs, au-dessus de ces découpes, l'âme de 111 est percée de part en part, et l'ouverture ou lumière 116 ainsi obtenue sert de cannelure de came pour deux tenons 117 et 118 respectivement fixés dans les têtes 119 et 120 des extrémité des tiges 112 et 113. Les têtes 119 et 120 portent respectivement des crochets 121 et 122 dirigés vers le bas et orientés de manière à pouvoir exercer une traction vers l'entrée de la rainure 92. Les têtes 119 et 120 et les corps des tiges sont réunis par des parties 123 et 124 de hauteur réduite par rapport à celle des corps des tiges, ce qui les rend souples, de manière à ce que les crochets 121 et 122 puissent être abaissés de part et d'autre de l'âme de 111, là où la semelle 115 est découpée.

La lumière 116 a une forme en V, très ouvert vers le haut, avec le haut 125 du V un peu prolongé vers vers l'extrémité 114 et le bas 126 du V vers l'entrée de la rainure, la partie basse 126 du V comportant par ailleurs une course rectiligne horizontale 127.

Quand, comme le montrent les Figs. 20a et 20b, la tige 112 est tirée, dans le sens de la flèche F1, vers l'extérieur de la rainure, le tenon 117 se déplace dans la lumière 116 en V si bien que le bec du crochet 121 descend au-dessous du niveau de la semelle 115 jusqu'au niveau de la partie 96 de la tête de la fiche 104, dans l'exemple montré. Au cours de la fin de course horizontale du tenon 117, le crochet 121 rencontre le plan 99 de la tête de la fiche 104 qui tourne dans le sens inverse des aiguilles d'une montre. Au cours de la rotation, le plan 99 tourne, puis échappe à l'action du crochet 121. Quand la tige est repoussée pour reprendre sa position de repos, le plan 99 n'est évidemment pas entraîné et le tenon 117 remonte dans la lumière 116, si bien que le crochet 121 remonte au-dessus de la semelle 115. On peut donc ensuite déplacer l'organe 101 dans la rainure 92 sans faire bouger les têtes des fiches 102 à 105.

Quand on désire changer à nouveau l'état de la fiche 104, c'est à dire la faire tourner dans le sens des aiguilles d'une montre, on introduit l'organe 101 dans la rainure 92 correspondante jusqu'à ce que les têtes des tiges 112 et 113 dépassent légèrement la tête de 104. On tire alors sur la tige 113, ce qui a pour effet de faire décrire au tenon 118 le V de 116, le crochet 122 descend alors et rencontre le plan 99 qui est entraîné jusqu'à échapper à 122. On a bien la rotation attendue.

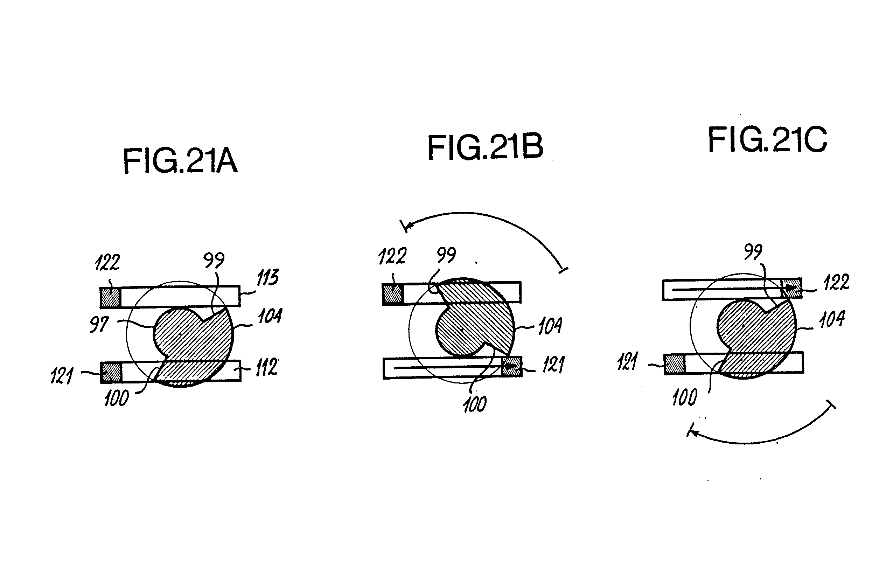

Comme le montrent, à plus grande échelle, les Figs. 21a à 21c, les plans 99 et 100 font un angle tel que la rotation de la fiche soit à chaque commutation de + ou de −90°. Dans l'exemple décrit, la distance entre les tiges 112 et 113 est juste supérieure au diamètre du renflement cylindrique 97. Comme le rayon de 97 est pratiquement moitié de celui de 95, l'angle des planes 99 et 100 est très peu inférieur à 180°.

Les terminaisons côniques 98 limitent la surface en contact avec l'organe 101 au cours des translations de celui-ci dans la rainure et limitent donc les couples parasites qui auraient tendance à faire tourner des têtes de fiches non sélectées.

Enfin, les tiges 112 et 113 sont maintenues latéralement, contre l'âme de la poutre 111, par deux joues 128 et 129. La somme des épaisseurs des joues 128 et 129 et de la largeur de la semelle de 111 est égale à la largeur d'une rainure, au jeu nécessaire près.

La vue schématique de dessus de la Fig. 21a montre la tête de fiche 104 au repos, ainsi que les tiges 112 et 113 dont on a figuré les crochets 121 et 122 par des carrés hachurés. A la Fig. 21b, la tige 112 a été tirée et le crochet 121 a entraîné le plan 100, si bien que la tête a tourné de +90°. Il faut noter que la largeur de l'âme de 111 est pratiquement égale au diamètre de la partie centrale 97 de la tête de fiche. Donc, quand la tige 112 est repoussée pour revenir au repos, le crochet 121 peut toucher la surface latérale de 97, mais n'entraîne pas la tête en rotation. A la Fig. 21c, la tige 113 a été tirée et, d'une manière analogue, fait tourner la tête de −90°.

Comme le montre la Fig. 20a, pour effectuer une manoeuvre correcte, la position longitudinale de l'organe de commutation dans la rainure doit être telle que la partie antérieure de la course horizontale 127 de 116 se trouve légèrement en avant du plan 98 tandis que la partie postérieure de 127 de trouve derrière 99, ou vice versa, selon l'orientation de la tête. On suppose que l'organe 101 est mû par un moteur pas à pas dont le pas est égal à celui des fiches. A noter que les découpes dans les semelles de 115 ont une longueur qui peut être inférieure au double du pas des fiches et qu'elles sont pratiquement centrées sur la fiche à commuter.

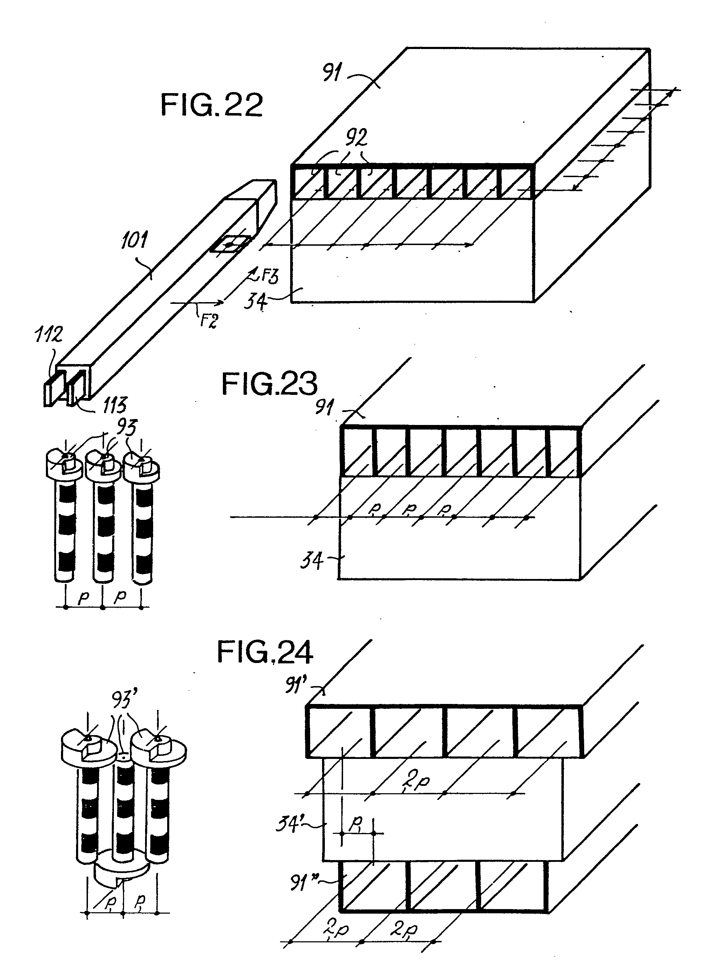

La Fig. 22 montre schématiquement un organe 101 devant les rainures 92 d'un module de commutation 91. La flèche F2 suggère le premier mouvement latéral pour amener l'organe 101 devant la rainure sélectée et la flèche F3 suggère le mouvement longitudinal de l'organe dans la rainure pour amener les découpes de 115 au-dessus de la tête à commuter.

A la Fig. 23, on a représenté une pile 34, surmontée d'un couvercle 91, dans laquelle les fiches sont toutes orientées avec la tête en haut, comme indiqué sur la partie gauche du dessin. Le pas des rainures est alors égal au pas *p* des fiches dans leurs grilles. Par contre, à la Fig. 24, on a représenté une pile 34', surmontée d'un couvercle supérieur 91' et reposant sur un couvercle inférieur 91", dans laquelle les fiches sont alternativement orientées tête en haut et tête en bas, comme indiqué sur la partie gauche du dessin. Le pas des rainures des modules 91' et 91" est alors égal au double du pas *p* des fiches, soit égal à *2p*. La disposition de la Fig. 24 permet d'utiliser des têtes 93' de diamètre plus important, ce qui a pour avantage de multiplier par deux le couple actif, quand on actionne les tiges 112 et 113 des organes de commutation.

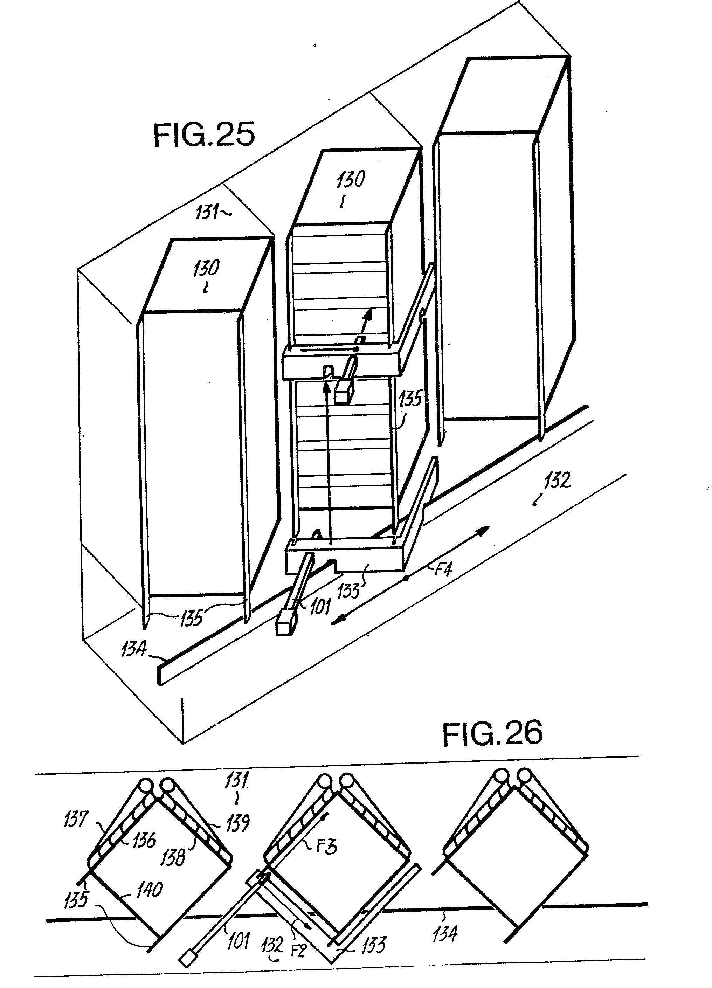

A la Fig. 25, on a représenté schématiquement en perspective une série de piles de la Fig. 9, montées verticalement. Les piles 130 sont orientées de manière à ce que leurs diagonales soient alignées en laissant toutes d'un côté la zone d'installation 131 et de l'autre côté la zone d'exploitation 132. On y a également représenté schématiquement on automate 133 qui peut être déplacé sur un rail 134 parallèle aux baies 130, comme l'indiquent les flèches F4. Les baies 130 sont munies de rails ou crémaillères verticaux 135 permettant d'assurer le déplacement vertical de l'automate 133 qui porte un organe de commutation 101, lequel peut être déplacé latéralement et longitudinalement. On suppose également que l'automate 133 comporte des moyens pour tirer et pousser les tiges 112 et 113 de l'organe 101.

L'automate 133 permet de sélecter la baie, de sélecter le module de commutation 91 dans la baie, la rainure 92 dans le module 91, d'introduire l'organe 101 dans la rainure, de commander la tige appropriée pour réaliser une connexion ou une déconnexion, puis de retirer l'organe 101 de la rainure. Aprés une opération, l'automate peut revenir au pied de la baie. Pour toutes ces opérations, des moteurs pas à pas peuvent être prévus dans l'automate. Il apparaît clairement que le positionnement d'un organe de commutation peut être entièrement automatique, ainsi que la manoeuvre des tiges 112 et 113. Il en résulte que les commutations à l'intérieur du répartiteur peuvent être entièrement automatisées, ce qui présente un avantage important.

La Fig. 26 met en évidence les avantages de ce type de pile. Deux zones 131 et 132 sont délimitées, la zone 131 étant dévolue aux équipes de ligne et d'installation et la zone 132 étant réservée au service d'exploitation. Dans la zone 131, le côté 136 reçoit les conducteurs des câbles d'arrivée 137 et le côté 138 reçoit les conducteurs de câbles de départ 139 vers le central. Certaines liaisons inter-piles sont réalisables en usine. Le côté 140 est affecté à la commande et aux tests (interruption de liaison, réalisation de dérivation, etc.).

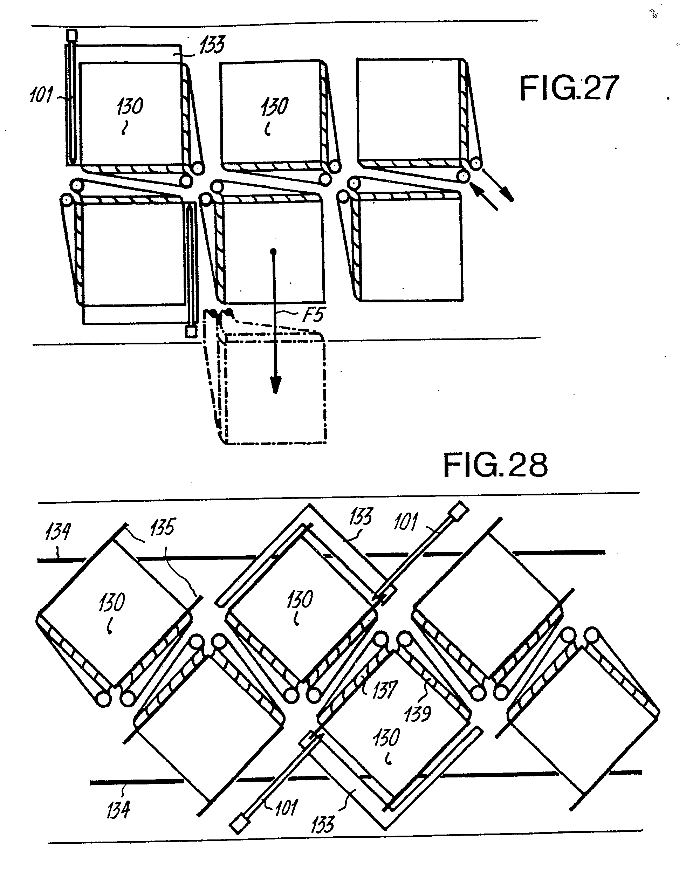

La Fig. 27 montre une exemple de travée constituée de deux rangées de baies 130 adossables. Cette disposition très compacte nécessite le déplacement (voir flèche F5) des modules empilables lors des raccordement.

La Fig. 28 représente un autre exemple de travée à double rangée de baies 130. Cette disposition en quinconce permet un accès direct aux câbles d'arrivée 137 et de départ 139.

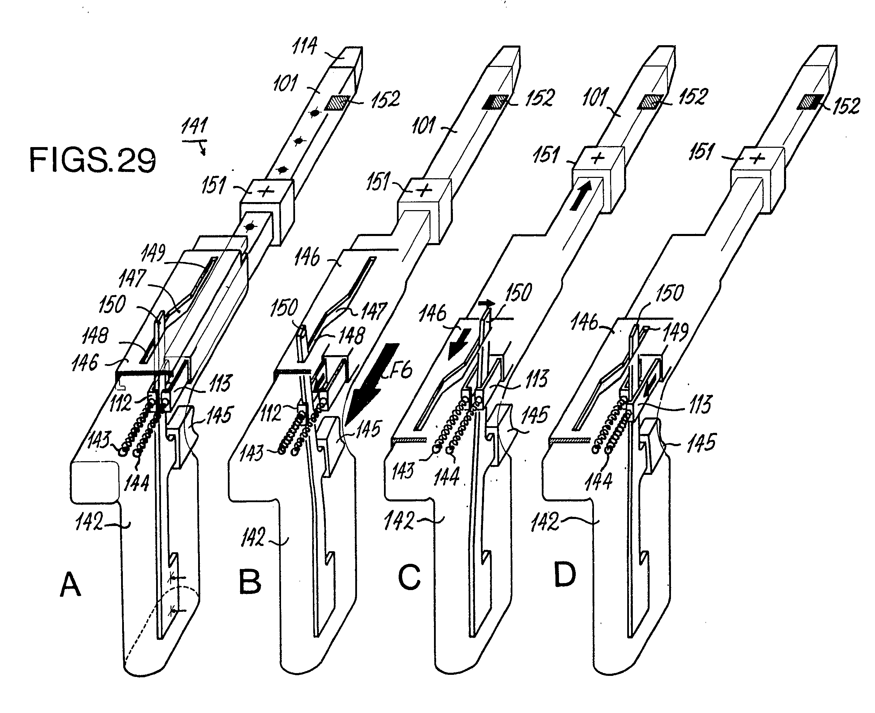

Les Figs. 29a à 29d représentent schématiquement un outil d'intervention manuelle 141 qui permet d'actionner les têtes de fiches comme un organe 101.

L'outil 141 comporte un organe 101 monté, à la façon d'un canon de pistolet, sur une crosse 142. Les extrémités externes des tiges 112 et 113 sont soumis à l'action de ressorts comprimés 143 et 144 qui tendent à les repouser vers le bout 114. La crosse 142 est munie d'une gâchette 145 qui permet de pousser un levier 150 vers l'arrière de l'outil, comme l'indique la flèche F6. Par ailleurs, un coulisseau 146 est monté à cheval sur la partie arrière de 101. Le coulisseau 146 présente une fente 147 ouverte vers le haut en forme de V, avec un prolongement horizontal en haut, comme la fente 116. Le centre de la fente 147 est à l'aplomb du plan médian des tiges 112 et 113. Les bouts de la fente 147 sont droits et parallèles à l'axe de 101, l'un 148 au-dessus de 112 et l'autre 149 au-dessus de 113. Le levier 150 solidaire de la gâchette 145 a son extrémité supérieure qui passe dans la fente 147. Quand le coulisseau 146 est poussé vers l'avant, le bout du levier 150 se trouve déporté vers la tige 112. Quand dans ces conditions, on appuie sur la gâchette 145, le levier 150 vient buter sur la partie recourbée (vers 113) de la tige 112 si bien que la tige 112 est tirée et peut actionner une tête de fiche comme on l'a décrit en relation avec les Figs. 20a à 20c. Quand le coulisseau 146 est tiré vers l'arrière, le bout du levier 150 se trouve déporté vers la tige 113. Quand dans ces conditions, on appuie sur la gâchette 145, le levier 150 vient buter sur la partie recourbée (vers 112) de la tige 113 si bien que la tige 113 est tirée et peut actionner une tête de fiche.

Sur la partie antérieure de l'organe 101 est monté un autre coulisseau 151 qui permet de définir l'enfoncement de l'organe 101 dans une rainure 94, ce qui permet de sélecter la tête de fiche à commuter. Plus particulièrement, la Fig. 29a montre le pistolet 97 à l'état de repos, le coulisseau 107 étant positionné correctement pour que les têtes 75 et 76, représentées symboliquement par un carré 108, puissent se trouver, une fois l'organe enfoncé, au-dessus de la tête à commuter.

La Fig. 29b montre la position du coulisseau 146 pour effectuer une opération de connexion, la gâchette 145 pouvant tirer la tige 112.

La Fig. 29c montre la position du coulisseau 146, tiré vers l'arrière, pour préparer une opération de déconnexion.

La Fig. 29d montre l'action de la gâchette 145 sur le levier 150 qui entraîne la tige 113 pour une opération de déconnexion.

**Revendications**

1. Commutateur à plusieurs couches de points de croisement se composant de plusieurs premières nappes de fils parallèles (57, 107), orientés dans une première direction, et de plusieurs secondes nappes de fils parallèles (58, 108), orientés dans une direction perpendiculaire aux premières nappes, les premières et secondes nappes étant intercalées, chaque nappe de fils étant portée par une grille en matière isolante, un point de croisement étant constitué par deux mailles adjacentes superposées et une surface conductrice (64) d'une fiche (61; 102—105), la hauteur de la surface conductrice (64) étant suffisante pour relier électriquement le segment de fil de la maille supérieure au segment de fil de la maille inférieure, chaque surface conductrice (64) de fiche occupant un secteur angulaire adéquat, des moyens de commande étant prévus pour faire tourner lesdites fiches (61; 102—105) d'un quart de tour dans un sens ou dans l'autre, caractérisé en ce que les fiches (61; 102—105) comportent des têtes (63) en forme de croissant ou secteur dont les deux cornes (67a, 67b; 99, 100) constituent deux faces d'accrochage, pratiquement diamétralement opposées, lesdits moyens de commande étant constitués par des moyens d'accrochage mobiles (70a, 70b, 70c; 121, 122), des barres de sélection (53; 111) deplaçables en translation au-dessus des têtes, et des barres ou tiges de travail (55.2, 55.3; 112, 113), les barres de sélection positionnant lesdits moyens d'accrochage (70a, 70b, 70c; 122, 123) en face de la ou des faces d'accrochage de la tête de la fiche à tourner et les barres ou tiges de travail (55.2, 55.3; 112, 113) déplaçant les moyens d'acrrochage (70a, 70b, 70c; 121, 122) contre les faces d'accrochage des têtes.

2. Commutateur suivant la revendication 1, caractérisé en ce que les moyens d'accrochage (70a, 70b, 70c) sont des dents souples, pendant sous les barres de sélection (53), lesdites dents (70a, 70b, 70c) étant déformables par des dents prévues dans les barres de travail (55.2, 55.3), les barres de sélection et de travail étant croisées, chaque barre de sélection (53) poussée dans un sens déterminant au moment du déplacement d'une des barres de travail (55.2), la rotation d'une tête (63) de fiche d'un quart de tour dans un sens, et tirée dans l'autre sens déterminant avec une barre de travail adjacente (55.3), mise au travail, la rotation de ladite tête (63) d'un quart de tour dans l'autre sens.

3. Commutateur suivant la revendication 1, caractérisé en ce que les moyens d'accrochage sont des crochets (121, 122) prévus aux extrémités de tiges de travail (112, 113) portées par une barre de sélection (111), les crochets (121, 122) pouvant être abaissé (ou monté) en conjonction avec un mouvement de translation de la tige de travail correspondante (112, 113) par rapport à la barre de sélection (111), le crochet (121 ou 122) d'une tige (112 ou 113) abaissé (ou monté) entraînant une des deux faces d'accrochage (100 ou 99) de la tête d'une fiche de commutation dans un sens, ce qui fait tourner la fiche d'un quart de tour dans un sens, le crochet de l'autre tige abaissé (ou monté) entraînant l'autre face d'accrochage, ce qui fait tourner la fiche d'un quart de tourner dans l'autre sens.

4. Commutateur suivant la revendication 3, caractérisé en ce que l'extrémité de chaque tige de travail (112, 113) a la forme d'une tête plate reliée au corps de la tige par une partie souple (123, 124), la tête portant un ergot (117, 118) engagé dans une fente (116) pratiquée dans la barre de sélection (111), la fente (116) ayant, dans un plan vertical, la forme d'un large V, ouvert vers le haut, avec un branche horizontale, de manière que le mouvement de translation de la tige (112, ou 113) par rapport à la barre (111) entraîne le déplacement de l'ergot (117 ou 118) dans la fente (116), et fasse descendre (ou monter) celui-ci, puis terminer sa course par un mouvement simple de translation, le crochet (121 ou 123) décrivant une trajectoire parallèle à celui de l'ergot (117 ou 118).

5. Commutateur suivant la revendication 4 ou 5, caractérisé en ce que les moyens de commande sont complétés par des moyens de guidage formé chacun d'un bloc rainuré au pas des nappes des fils, l'ensemble étant positionné au-dessus des têtes de fiche, les barres de sélection suivant l'une des revendications 3 ou 4 pouvant coulisser dans les rainures du bloc.

6. Commutateur suivant l'une des revendications 1 à 5, caractérisé en ce que chaque tête de fiche (63) en forme de croissant ou de secteur est prolongée vers le bas par une partie basse cylindrique, un renflement cylindrique étant prévu entre les deux cornes ou faces d'accrochage.

7. Commutateur suivant l'une des revendications 5 et 6, caractérisé en ce que le centre du renflement cylindrique est surmonté d'un pion conique.

8. Commutateur suivant l'une des revendications 1 à 5, caractérisé en ce que chaque grille est constituée par la juxtaposition dans un plan d'élément de grille parallèle, chaque élément de grille étant fabriqué à partir d'un ruban maillé incluant une pluralité de fils de la nappe, le ruban étant coupé à la longueur de la grille.

9. Commutateur suivant la revendication 6, caractérisé en ce que les grilles des secondes nappes sont décalées d'un quart de tour par rapport aux grilles des premières nappes.

10. Outil manuel pour commutateur suivant l'une des revendications 3 à 5, caractérisé en ce qu'au bout accessible de l'outil (141) est prévu une crosse du genre crosse de pistolet (142) dont la gachette peut actionner sélectivement l'une des tiges de travail par l'intermédiaire d'un dispositif de commutation mécanique actionné manuellement.

11. Commutateur suivant la revendication 5, caractérisé en ce que, dans les rainures d'un bloc, les barres de sélection peuvent être avancées pas à pas pour positionner les extrémités actives des tiges en face de la tête de la fiche à commuter.

12. Commutateur suivant la revendication 11, caractérisé en ce que les barres de sélection sont montées sur des automates comportant des moteurs pas à pas pour les déplacer horizontalement pour sélectionner une baie et verticalement pour sélectionner un bloc rainuré dans une baie.

## Patentansprüche

1. Schalter mit mehreren Lagen von Kreuzungspunkten, bestehend aus mehreren ersten Lagen paralleler Drähte (57, 107), die in einer ersten Richtung orientiert sind, und mehreren zweiten Lagen paralleler Drähte (58, 108), die in einer Richtung senkrecht zur ersten Richtung orientiert sind, wobei die ersten und zweiten Lagen ineinandergeschachtelt sind, jede Lage von Drähten durch ein Gitter aus Isoliermaterial getragen ist, und ein Kreuzungspunkt durch zwei benachbarte, übereinanderliegende Maschen und eine leitende Fläche (64) eines Steckers (61; 102 bis 105) gebildet wird, wobei die Höhe der leitenden Fläche (64) ausreichend ist, um das Drahtsegment der oberen Masche mit dem Drahtsegment der unteren Masche elektrisch zu verbinden, und jede leitende Fläche (64) einen angemessenen Winkelsektor einnimmt, wobei ferner Steuermittel vorgesehen sind, um die genannten Stekker (61; 102 bis 105) um eine Vierteldrehung in der einen oder anderen Richtung zu drehen, dadurch gekennzeichnet, daß die Stekker halbmondförmige oder sektorförmige Köpfe (63) aufweisen, deren beide Hörner (67a, 67b; 99, 100) zwei praktisch diametral gegenüberliegende Mitnahmeflächen bilden, daß die genannten Steuermittel durch bewegbare Mitnehmer (70a, 70b, 70c; 121, 122), in Translation oberhalb der Köpfe verschiebbare Auswahlstangen (53, 111) und Arbeitsstangen oder -stäbe (55.2, 55.3; 112, 113) gebildet werden, wobei die Auswahlstangen (53, 111) de Mitnehmer (70a, 70b, 70c; 122, 123) so positionieren, daß sie der Mitnahmefläche oder den Mitnahmeflächen des Kopfes des zu drehenden Stekkers zugekert sind, und wobei die Arbeitsstangen oder -stäbe (55.2, 55.3; 112, 113) die Mitnehmer (70a, 70b, 70c; 121, 122) gegen die Mitnahmeflächen der Köpfe verlagern.

2. Schalter nach Anspruch 1, dadurch gekennzeichnet, daß die Mitnehmer (70a, 70b, 70c) nachgiebige Zähne sind, die an den Auswahlstangen (53) hängen, daß die Zähne (70a, 70b, 70c) durch Zähne deformierbar sind, die an den Arbeitsstangen (55.2, 55.3) vorgesehen sind, daß die Auswahl- und Arbeitsstangen einander kreuzen, daß jede Auswahlstange (53), wenn sie in eine Richtung gestoßen wird, durch Bewegung einer der Arbeitsstangen (55.2) die Drehung eines Steckerkopfes (63) um eine Vierteldrehung in dem einen Drehsinn bestimmt, und wenn sie in die andere Richtung gezogen wird, mit einer benachbarten Arbeitsstange (55.3) im Betrieb die Drehung des Kopfes (63) um eine Vierteldrehung in dem anderen Drehsinn bestimmt.

3. Schalter nach Anspruch 1, dadurch gekennzeichnet, daß die Mitnehmer aus Haken (121, 122) bestehen, die an den Enden der Arbeitsstangen (112, 113) angebracht sind, die von einer Auswahlstange (111) getragen sind, daß die Haken (121, 122) in Verbindung mit einer Translationsbewegung der entsprechenden Arbeitsstange (112, 113) in bezug auf die Auswahlstange (111) absenkbar (oder anhebbar) sind, daß der abgesenkte (oder angehobene) Haken (121 oder 122) einer Stange (112 oder 113) eine der beiden Mitnahmeflächen (100 oder 99) des Kopfes eines Schaltersteckers in einem Drehsinn antreibt, wodurch der Steker um eine Vierteildrehung in einem Drehsinn drehbar ist, daß der abgesenkte (oder angehobene (Haken der anderen Stange die andere Mitnahmefläche antreibt, wodurch der Stecker um eine Vierteldrehung im anderen Drehsinn drehbar ist.

4. Schalter nach Anspruch 3, dadurch gekennzeichnet, daß das Ende jeder Arbeitsstange (112, 113) die Form eines flachen Kopfes besitzt, der mit dem Körper der Stange durch ein flexibles Teil (123, 124) verbunden ist, daß der Kopf einen Nocken (117, 118) trägt, der mit einem Schlitz (116) in der Auswahlstange (111) in Eingriff ist, daß der Schlitz (116) in einer vertikalen Ebene die Form eines großen, nach oben offenen V mit einem horizontalen Zweig besitzt, so daß die Translationsbewegung der Stange (112 oder 113) in bezug auf die Auswahlstange (111) eine Verlagerung des Nockens (117 oder 118) entlang des Schlitzes (116) bewirkt und damit den Nocken nach unten (oder nach oben) bewegt, worauf dieser seinen Lauf durch eine einfache Translationsbewegung beendet, wobei der Haken (121 oder 123) eine Bahn beschreibt, die parallel zu der des Nockens (117 oder 118) ist.

5. Schalter nach Anspruch 4, dadurch gekennzeichnet, daß die Steuermittel durch Führungsmittel vervollständigt sind, von denen jedes aus einem Block gebildet ist, der Rillen im Abstand der Drahtlagen besitzt, daß sich die gesamte Anordnung unterhalb der Steckerköpfe befindet, wobei die Auswahlstangen gemäß Anspruch 3 oder 4 in den Rillen des Blocks gleitbar sind.

6. Schalter nach einem der Ansprüche 1 bis 5, dadurch gekennzeichnet, daß jeder halbmondförmige oder sektorförmige Steckerkopf (63) nach unten durch ein unteres zylindrisches Teil verlängert ist, wobei zwischen den beiden Hörnern oder Mitnahmeflächen eine zylindrische Verdickung vorgesehen ist.

7. Schalter nach einem der Ansprüche 5 oder 6, dadurch gekennzeichnet, daß in der Mitte der zylindrischen Verdickung ein konusförmiger Knopf angeordnet ist.

8. Schalter nach einem der Ansprüche 1 bis 5, dadurch gekennzeichnet, daß jedes Gitter durch Nebeneinanderanordnung von parallelen Gitterelementen in einer Ebene gebildet wird, daß jedes Gitterelement aus einem mit Maschen versehenen Band hergestellt ist, das zahlreiche Drähte der Schicht enthält, wobei das Band auf die Länge des Gitters abgeschnitten wird.

9. Schalter nach Anspruch 6, dadurch gekennzeichnet, daß die Gitter der zweiten Schichten um eine Vierteldrehung in bezug auf die Gitter der ersten Schichten verschoben sind.

10. Ein Handwerkszeug für einen Schalter nach einem der Ansprüche 3 bis 5, dadurch gekennzeichnet, daß an dem Ende des Werkzeugs (141), das zugänglich ist, eine Traverse (142) nach Art eines Pistolenhandgriffs vorgesehen ist, dessen Auslöser wahlweise eine der Arbeitsstangen über eine handbetätigte mechanische Schaltervorrichtung betätigen kann.

11. Schalter nach Anspruch 5, dadurch gekennzeichnet, daß in den Rillen eines Blocks die Auswahlstangen Schritt für Schritt vorwärtsbewegbar sind, um die aktiven Enden der Stangen vor dem Kopf des zu schaltenden Steckers zu positionieren.

12. Schalter nach Anspruch 11, dadurch gekennzeichnet, daß die Auswahlstangen an Automaten angebracht sind, die Schrittmotore enthalten, um sie in horizontaler Richtung zur Auswahl einer Ausnehmung und in vertikaler Richtung zur Auswahl eines gerillten Blocks in einer Ausnehmung zu verlagern.

**Claims**

1. A switch with several layers of cross points, composed of several first layers of parallel wires (57, 107) oriented in a first direction and several second layers of parallel wires (58, 108) oriented in a direction perpendicular to the first direction, the first and second layers being interposed between each other, each layer of wires being supported by a grid of insulating material, a cross point being constituted by two superimposed adjacent meshes and a conductor surface (64) of a plug (61, 102—105), the height of the conductor surface (64) being sufficient to electrically connect the wire segment of the upper mesh to the wire segment of the lower mesh, each plug conductor surface (64) occupying an adequate angular sector, control means being provided to cause said plugs (61, 102—105) to rotate by one quarter of a rotation in one direction or in the other direction, characterized in that the plugs (61, 102—105) comprise crescent-shaped or sector-shaped heads (63) the two horns (67a, 67b, 99, 100) of which constitute two practically diametrally opposite hookable faces, said control means being constituted by movable hooking means (70a, 70b, 70c, 121, 122), selection bars (53, 111) being movable in translation above the heads, and work bars or rods (55.2, 55.3, 112, 113), selection bars (53, 111) positioning said hooking means (70a, 70b, 70c, 122, 123) facing the hookable face or faces of the plug head to be rotated and the work bars or rods (55.2, 55.3, 112, 113) displacing the hooking means (70a, 70b, 70c, 121, 122) against the hookable faces of the heads.

2. A switch according to claim 1, characterized in that the hooking means (70a, 70b, 70c) are flexible teeth hanging on the selection bars (53), said teeth (70a, 70b, 70c) being deformed by teeth provided in the work bars (55.2, 55.3), the selection and work bars being crossed, each selection bar (53), when pushed in one direction, determining through the move of one of the work bars (55.2) the rotation of one plug head (63) by one quarter of a rotation in one direction, and, when pulled in the other direction, determining with an adjacent work bar (55.3) in operation condition the rotation of said head (63) by one quarter of a rotation in the other direction.

3. A switch according to claim 1, characterized in that the hooking means are hooks (121, 122) provided at the ends of the work rods (112, 113) carried by a selection bar (111), the hooks (121, 122) being lowered (or raised) in conjunction with a translation move of the corresponding work rod (112, 113) with respect to the selection bar (111), the hook (121 or 122) of a lowered (or raised) rod (112 or 113) driving one of the two hookable faces (100 or 99) of the head of one switching plug in one. direction, this causing said plug to rotate by one quarter of a rotation in one direction, the hook of the other rod, once lowered (or raised), driving the other hookable face, this causing the plug to rotate by one quarter of a rotation in the other direction.

4. A switch according to claim 3, characterized in that the end of each work rod (112, 113) presents the shape of a flat head connected to the body of the rod by a flexible part (123, 124), said flat head carrying a stud (117, 118) engaged in a slot (116) provided in the selection bar (111), said slot (116) having, in a vertical plane, the shape of a wide open upwardly V with a horizontal branch, such that the translation move of the rod (112 or 113) with respect to the bar (111) causes the displacement of the stud (117 or 118) along the slot (116) and causes said stud to move downwardly (or upwardly), then to complete its run by a simple translation motion, the hook (121 or 123) describing a trajectory which is parallel to that of the stud (117 or 118).

5. A switch according to claim 4 or 5, characterized in that the control means are completed by guiding means, each made of a module grooved at the spacing of the wires layers, the whole assembly being positioned above the plug heads, the selection bars according to claim 3 or 4 being slidable within the grooves of the module.

6. A switch according to one of claims 1 to 5, characterized in that each crescent-shaped or sector-shaped plug head (63) extends downward with a low cylindrical part, a cylindrical swelling being provided between the two hookable horns or faces.

7. A switch according to claim 5 or 6, characterized in that the center of the cylindrical swelling is topped with a cone-shaped knob.

8. A switch according to one of claims 1 to 5, characterized in that each grid is constituted by the juxtaposition in one plane of parallel grid elements, each grid element being manufactured from a meshed ribbon including a plurality of wires of the layer, said ribbon being cut off at the length of the grid.

9. A switch according to claim 6, characterized in that the grids of the second layers are shifted by one quarter of a rotation with respect to the grids of the first layers.

10. A hand tool for governing a switch according to one of claims 3 to 5, characterized in that at the end of the tool (141) which is accessible, there is provided for a stock of the pistolstock type (142), the trigger of which can selectively operate one of the work rods through a hand-operated mechanical switching device.

11. A switch according to claim 5, characterized in that, in the grooves of a module, the selection bars can be moved forward step by step in order to position the active ends of the rods in front of the head of the plug to be switched.

12. A switch according to claim 11, characterized in that the selection bars are mounted on automatic installations comprising step-by-step motors to displace them in the horizontal direction, to select a bay and in the vertical direction to select a grooved module in a bay.

FIG.1

FIG.3

FIG.2

FIG.4

FIG.6

# FIG.7

# FIG.8

FIG.9A

FIG.9B

FIG.9C

# FIG.10

# FIG.11

**FIG.12**

**FIG.13**

# FIG.14

# FIG.15

# FIG.16

FIG.18

FIG.17

# FIG.19

FIG.20A

FIG.20B

FIG.20C

0 025 729

FIG.21A FIG.21B FIG.21C

FIG.22

FIG.23

FIG.24

FIG.25

FIG.26

FIG.27

FIG.28

FIGS.29